Europäisches Patentamt

European Patent Office

Office européen des brevets

(19)

(11) Numéro de publication : **0 373 040 B1**

(12) **FASCICULE DE BREVET EUROPEEN**

(45) Date de publication du fascicule du brevet :
**04.03.92 Bulletin 92/10**

(51) Int. Cl.$^5$ : **G01L 1/16,** G01L 1/10,
G01P 15/02

(21) Numéro de dépôt : **89403313.3**

(22) Date de dépôt : **29.11.89**

(54) **Transducteur force-fréquence à poutres vibrantes et accéléromètre pendulaire en comportant application.**

(30) Priorité : **02.12.88 FR 8815835**

(43) Date de publication de la demande :
**13.06.90 Bulletin 90/24**

(45) Mention de la délivrance du brevet :
**04.03.92 Bulletin 92/10**

(84) Etats contractants désignés :
**CH DE GB IT LI NL SE**

(56) Documents cités :
**EP-A- 0 101 669
EP-A- 0 219 748
DE-A- 3 013 185
DE-A- 3 241 601
US-A- 4 439 705
US-A- 4 485 323
MECHANICAL ENGINEERING, vol. 109, no. 5,
mai 1987, pages 52-56, New York, USA; D. W.
BUSSE: "Quartz Transducers for Precision
under Pressure"**

(73) Titulaire : **SOCIETE D'APPLICATIONS
GENERALES D'ELECTRICITE ET DE
MECANIQUE SAGEM
6, Avenue d'Iéna
F-75783 Paris Cédex 16 (FR)**

(72) Inventeur : **Deval, Alain
4 Rue Haussmann
F-92400 Courbevoie (FR)**
Inventeur : **Amand, Yvon
24 Allée Mozart
F-95230 Soisy Sous Montmorency (FR)**

(74) Mandataire : **Fort, Jacques
CABINET PLASSERAUD 84, rue d'Amsterdam
F-75009 Paris (FR)**

## Description

L'invention concerne les transducteurs force-fréquence à poutres vibrantes qui permettent de constituer des appareils de mesure de force, de masse et de volume très faibles. Elle concerne de façon plus précise les transducteurs du type comprenant une lame allongée de matériau piézo-électrique destinée à être encastrée à ses deux extrémités sur des éléments d'application d'une force longitudinale à la lame, fractionnée dans sa partie médiane pour constituer deux poutres latérales portant des électrodes de mise en vibration des poutres dans le plan des grandes faces de la lame et de mesure de la fréquence de vibration.

Un tel transducteur permet de mesurer la force de traction appliquée sur les extrémités de la lame. Il trouve une application particulièrement importante, bien que non exclusive, dans les accéléromètres pendulaires non asservis comportant une masse sismique pendulaire reliée à un socle par une articulation lui permettant de débattre dans une direction de sensibilité perpendiculaire à l'articulation. Les extrémités du transducteur sont alors respectivement solidarisées du socle et de la masse.

On connaît déjà de nombreux transducteurs du type ci-dessus défini. Des exemples de réalisation sont donnés dans les documents US-A-3 238 789 (Sera) et FR-A-2 454 614 (United States Department of Energy). D'après ce dernier document, il serait essentiel que la distance qui sépare les deux poutres soit très faible et constitue une fente dont la largeur est inférieure à l'épaisseur de la poutre. Le motif donné pour cette condition est que la fente doit être étroite pour que les forces appliquées aux deux poutres soient égales et pour que le facteur de surtension Q soit élevé et donne une stabilité acceptable.

Si on peut effectivement réaliser des transducteurs du type ci-dessus défini ayant une masse et un volume très faibles et une sensibilité acceptable, on peut leur faire un certain nombre de reproches. Le principal est que leur caractéristique de réponse force-fréquence varie en fonction de la température. Pour un transducteur de type connu que l'on peut considérer comme représentatif, le facteur d'échelle (variation de fréquence sous une accélération égale à g = 9,81 ms$^{-2}$) va de 0,5 à quelques Herz. Or, pour une température de fonctionnement de 70°C, valeur habituelle dans de nombreux équipements inertiels, la variation parabolique de fréquence est de 7,5.10$^{-2}$ Hz par °C : un écart aussi minime que 0,1°C entre les deux lames du capteur se traduit par une erreur en accélération de 7,5.10$^{-2}$ g, ce qui est important par rapport à la sensibilité.

L'invention vise à fournir un transducteur du type ci-dessus défini répondant mieux que ceux antérieurement connus aux exigences de la pratique, notamment en ce qu'il permet de réaliser une correction de température précise et fidèle, tenant compte de la température effective du transducteur et donc insensible aux écarts de température qui peuvent exister entre le transducteur et son environnement.

Dans ce but, l'invention propose un transducteur comportant une poutre centrale portant un capteur de température résistif, séparée des poutres latérales par des fentes longitudinales, perpendiculaires aux grandes surfaces de la lame.

L'ensemble de la lame étant à la même température, la connaissance de la température de la poutre centrale permet, à partir d'une courbe de calibrage préalablement mémorisée, d'effectuer une correction exacte. Cette correction peut être effectuée aussi bien dans le cas d'un capteur comprenant un seul transducteur que dans le cas d'un capteur comportant deux transducteurs associés dans un montage différentiel, la correction devant alors tenir compte de la différence entre les températures des deux transducteurs.

Dans un premier mode de réalisation, la poutre centrale est reliée aux deux extrémités de la lame. Contrairement aux indications données dans le document FR-A-2 454 614, la présence de la poutre centrale ne réduit la sensibilité du transducteur que par un facteur égal au rapport entre la section des poutres latérales vibrantes et la somme de la section de ces poutres et de la poutre centrale : ce facteur peut être maintenu à une valeur proche de 1, par exemple d'environ 3/4. En contrepartie de cette diminution de sensibilité, la résistance à la rupture du transducteur, et donc sa plage de fonctionnement possible, est augmentée dans un rapport inverse du facteur précédent, c'est-à-dire par 4/3.

Dans un autre mode de réalisation, la poutre centrale est séparée d'une des extrémités de la lame : dans ce cas, il n'y a aucune réduction de sensibilité et, contrairement à ce qu'on pouvait penser à la lecture du document FR-A-2 454 614 déjà mentionné, la séparation des poutres latérales par la poutre centrale ne se traduit ni par une réduction du facteur de surtension, ni par un déséquilibre entre les forces appliquées aux poutres latérales.

L'utilisation d'une poutre centrale séparée d'une des extrémités permet au surplus, à condition de munir cette poutre d'électrodes de mesure de l'amplitude des vibrations en flexion, d'équilibrer les mouvements vibratoires des deux poutres latérales. En effet, la poutre centrale encastrée à une extrémité est sollicitée en flexion à la fréquence de fonctionnement du transducteur, avec une amplitude qui est une fonction croissante du déséquilibre des mouvements vibratoires des deux poutres latérales. Ce déséquilibre, qui réduit le facteur de surtension maximal, est dû par exemple à des écarts dimensionnels des deux poutres latérales. Par volatilisation d'une faible masse sur l'une des poutres, par exemple à l'aide d'un laser, on peut réduire le déséquilibre à une valeur pratiquement nulle, décelée par l'absence de vibrations induites dans la poutre médiane.

L'invention sera mieux comprise à la lecture de la description qui suit de modes particuliers de réalisation, donnés à titre d'exemples non limitatifs. La description se réfère aux dessins qui l'accompagnent, dans lesquels :

– la Figure 1 montre, en perspective, un transducteur selon un mode particulier de réalisation l'invention, l'échelle n'étant pas respectée pour plus de clarté ;

– la Figure 2 est une vue en plan schématique d'un transducteur constituant une variante de celui de la Figure 1 ;

– la Figure 3 est un schéma simplifié d'un circuit électrique de mesure pouvant être associé au transducteur de la Figure 1 ;

– la Figure 4 montre, en coupe, un accéléromètre utilisant deux transducteurs suivant l'invention.

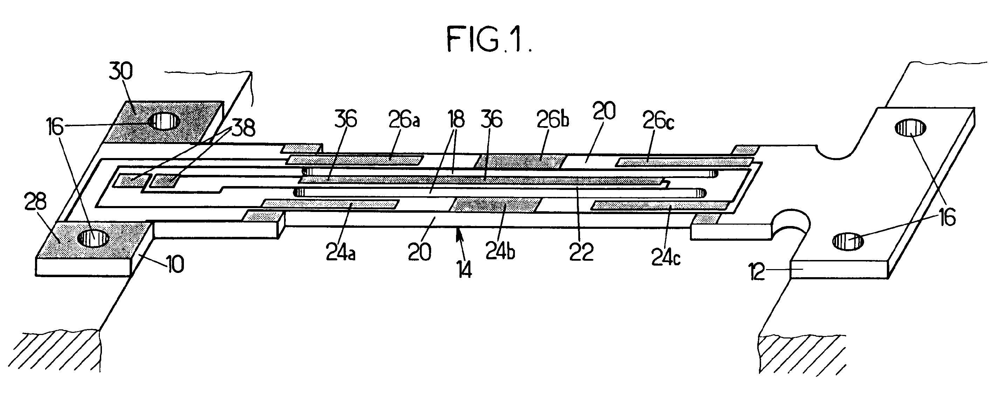

Le transducteur montré schématiquement en Figure 1 est constitué par une lame monolithique constituant résonateur, en matériau piézo-électrique, généralement en quartz. Cette lame peut être regardée comme comprenant deux parties terminales 10 et 12 destinées à être fixées à des éléments mécaniques non vibrants d'application d'un effort longitudinal à la lame et une partie active allongée 14. En règle générale, les parties terminales seront fixées par des liaisons assimilables à des encastrements : ces parties terminales plates peuvent par exemple être appliquées sur des faces correspondantes des éléments d'application d'effort à l'aide d'axes traversant des trous 16.

La lame est toujours très mince : son épaisseur est de l'ordre du dixième de millimètre et sa largeur est souvent supérieure d'un ordre de grandeur à l'épaisseur.

Deux fentes parallèles longitudinales 18 ménagées dans la partie active 14 fractionnent cette dernière en deux poutres latérales 20, disposées symétriquement de part et d'autre du plan médian de la lame, et une poutre centrale 22. Le découpage de la lame dans une feuille de quartz plate et le découpage des fentes 18 peuvent être réalisés par photolithographie, suivant un processus bien maîtrisé et permettant la fabrication par lots. La photolitographie permet de réaliser des fentes 18 très minces, ayant une épaisseur généralement inférieure au dixième de millimètre. Ces fentes s'étendent sur une fraction importante de la longueur de la partie active 14. Dans le cas illustré sur la Figure 1, elles se terminent à distance de la liaison d'encastrement. Souvent, un rapport entre la longueur des fentes 18 et la longueur entre encastrements compris entre 0,4 et 0,7 donne de bons résultats. Le rapport entre la largeur des poutres latérales 20 et l'épaisseur de la lame est généralement compris entre 1 et 2,4.

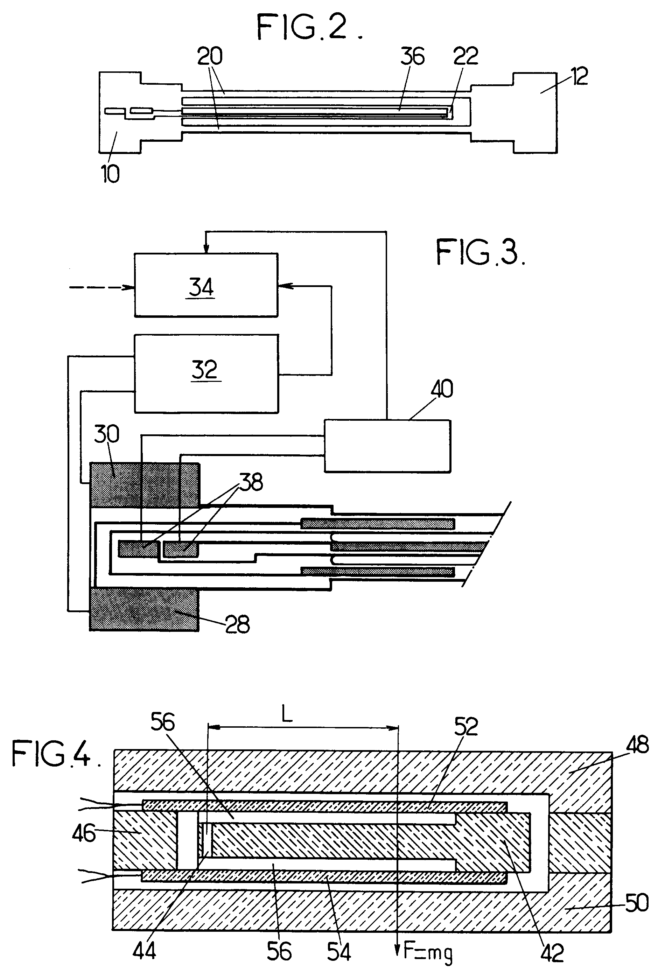

Les poutres latérales portent des électrodes de mise en vibration dans le plan de la lame et de mesure de la fréquence de vibration. On peut notamment prévoir, à titre d'exemple, sur la face inférieure des poutres, une métallisation reliée à la masse et, sur la face supérieure, un jeu d'électrodes ayant la constitution schématisée en Figure 1. Ces électrodes sont réparties en deux groupes, respectivement 24a, 24b et 24c et 26a, 26b et 26c. Les électrodes d'un même groupe sont reliées entre elles et sont reliées à une plage de raccordement 28 ou 30 ménagée sur l'une des extrémités 10. Dans une variante du montage, la face inférieure des poutres porte un jeu d'électrodes identique à celui de la face supérieure, l'alimentation au niveau des électrodes se faisant par des métallisations sur les flancs des poutres. Comme le montre la Figure 3, les plages 28 et 30 sont reliées aux sorties d'un oscillateur 32 qui s'accorde sur la fréquence propre des lames, mesurée par un fréquencemètre 34. On utilise généralement un montage différentiel comportant deux transducteurs du genre montré en Figure 1 ou 3, le fréquencemètre 34 mesurant par battements la différence entre les fréquences de deux transducteurs identiques dont l'un est soumis à la force à mesurer et dont l'autre (dont la sortie est indiquée par une flèche en tirets sur la Figure 3) n'est soumis à aucune force ou à une force égale, mais de sens opposé.

La poutre médiane 22 porte une sonde 36 à résistance de mesure de température. Cette sonde peut être constituée par une couche mince, d'environ 1μm d'épaisseur, de platine sur une sous-couche d'accrochage, formée par exemple par une pellicule de chrome de 100 Å d'épaisseur. Une telle sonde a une résistance qui varie de façon sensiblement linéaire en fonction de la température. Les extrémités de la sonde 36, en forme de bande allongée, sont reliées par des pistes conductrices à des plages 38 de raccordement de conducteurs de liaison à un circuit 40 de mesure de résistance et donc de température (Figure 3).

Le signal de sortie du circuit 40 peut être appliqué au circuit 34 de mesure de fréquence, qui comporte alors une table de correction en fonction de la température permettant de fournir une indication corrigée de la force de traction ou de compression appliquée au transducteur.

Dans le cas d'un capteur différentiel, à deux transducteurs, le circuit 40 de mesure de température peut être prévu pour mesurer, non pas la température absolue des deux transducteurs, mais leur différence de température.

Dans la variante de réalisation de l'invention montrée en Figure 2, la poutre centrale 22 est séparée de la partie terminale 12. Le transducteur de la Figure 2 peut être identique à celui de la Figure 1, sauf en ce qui concerne cette séparation, et peut donc être fabriqué avec simplement une très légère modification d'un masque de photolithographie. On peut ainsi obtenir, avec le même procédé de fabrication, soit le transducteur montré en Figure 1 lorsqu'on recherche une résistance élevée, soit le celui de la Figure 3 lorsqu'on recherche une sensibilité maximale.

Le mode de réalisation de la Figure 2 permet au surplus d'équilibrer les mouvements vibratoires des poutres 20 : en effet, la poutre centrale 22, encastrée à une extrémité et placée entre deux poutres vibrantes 20, est sollicitée en flexion à la fréquence de l'oscillateur 32, avec une amplitude liée au déséquilibre des mouvements vibratoires des poutres 20. L'amplitude de ce mouvement peut être détectée à l'aide d'électrodes supplémentaires placées sur la poutre centrale 22 et non représentées. On peut alors équilibrer les poutres 20 en volatilisant partiellement des dépots prévus à l'origine sur ces poutres 20. On peut en particulier prévoir une surépaisseur d'or sur les électrodes 24b̲ et 26b̲ et volatiliser, à l'aide d'impulsions laser, des faibles masses sur ces dépôts jusqu'à réduire le déséquilibre à une valeur nulle. On peut ainsi obtenir un facteur de surtension maximal par équilibrage.

Le transducteur qui vient d'être décrit comporte de nombreuses applications. La Figure 4 montre, à titre d'exemple, un accéléromètre utilisant deux transducteurs suivant l'invention, montés de façon différentielle de sorte que l'un des transducteurs soit soumis à un effort de compression lorsque l'autre est soumis à un effort de traction, ce qui élimine certaines erreurs.

L'accéléromètre montré en Figure 4 comprend une masse sismique 42 reliée par une articulation 44 à un socle 46. Le socle appartient a un cadre entourant complètement la masse et destiné à être placé entre deux flasques 48 et 50 pour constituer une cellule accéléromètrique qui peut être étanche. Sous l'action d'une accélération g, la masse sismique est soumise à un moment, par rapport à la charnière, égal à mgL (Figure 4).

Le capteur est constitué par deux transducteurs 52 et 54 encadrant la masse sismique 42 dans la direction de l'axe sensible, indiquée par la flèche F. Chaque transducteur a une extrémité fixée à plat sur le socle 46 et une autre extrémité fixée à plat sur la masse 42. Des évidements 56 ménagés dans la masse, par attaque chimique par exemple, permettent aux poutres des transducteurs de vibrer sans être gênées.

## Revendications

1. Transducteur comprenant une lame allongée de matériau piézo-électrique destinée à être fixée à ses deux extrémités sur des éléments d'application d'une force longitudinale à la lame, fractionnée dans sa partie médiane pour constituer deux poutres latérales (20) portant des électrodes (24-26) de mise en vibration des poutres dans le plan des grandes faces de la lame et de mesure de la fréquence de vibration, **caractérisé en ce que** la lame comporte une poutre centrale (22) portant un capteur de température résistif (36), séparée des poutres latérales par des fentes longitudinales (18) perpendiculaires aux grandes surfaces de la lame.

2. Transducteur selon la revendication 1, caractérisé en ce que la poutre centrale (22) est reliée aux deux extrémités (10, 12) de la lame.

3. Transducteur selon la revendication 1, caractérisé en ce que la poutre centrale (22) est séparée d'une des extrémités (12) de la lame.

4. Transducteur selon l'une quelconque des revendications précédentes, caractérisé en ce que la poutre centrale est munie d'électrodes de mesure de l'amplitude des vibrations de flexion.

5. Transducteur selon l'une quelconque des revendications précédentes, caractérisé en ce que ledit capteur est constitué par une bande métallique mince (36), par exemple en platine, sur une face de la poutre centrale.

6. Transducteur selon la revendication 5, caractérisé en ce que les extrémités de la bande sont reliées par des pistes conductrices à des plages (38) de raccordement d'un circuit (40) de mesure de température.

7. Accéléromètre pendulaire comportant une masse sismique pendulaire (42) reliée à un socle (46), une articulation (44) lui permettant de débattre dans la direction d'un axe sensible et au moins un transducteur force-fréquence (52, 54) suivant l'une quelconque des revendications 1 à 6, reliant la masse au socle et muni d'électrodes de mise en vibration destinées à être couplées à un oscillateur et à un circuit de mesure de fréquence.

## Claims

1. Transducer comprising an elongated strip of piezo-electric material arranged for being fixed at both ends thereof on elements for applying a longitudinal force to the strip, divided in its middle portion for constituting two lateral beams (20) carrying electrodes (24-26) for vibrating the beams in the plane of the major surfaces of the strip and for measuring the vibration frequency, characterized in that the strip comprises a central beam (22) carrying a resistive temperature sensor (36), separated from the lateral beams by longitudinal slits (18) perpendicular to the major surfaces of the strip.

2. Transducer according to claim 1, characterized in that the central beam (22) is connected to the two ends (10, 12) of the strip.

3. Transducer according to claim 1, characterized in that the central beam (22) is separated from one of the ends (12) of the strip.

4. Transducer according to any one of the preceding claims, characterized in that the central beam is provided with electrodes for measuring the amplitude of the flexure vibrations.

5. Transducer according to any one of the preceding claims, characterized in that said sensor consists of a thin metal film (36), for instance of platinum, on a surface of the central beam.

6. Transducer according to claim 5, characterized in that the ends of the film are connected by conducting paths to zones (38) for connection of a temperature measuring circuit (40).

7. Pendular accelerometer comprising a pendular seismic body (42) connected to a base (46) through an articulation (44) for movement in the direction of a sensitive axis and at least a force-frequency transducer (52, 54) according to any one of claims 1-6, which connects the body to the base and is provided with vibrating electrodes arranged to be coupled with an oscillator and with a frequency measurement circuit.

raturmeßschaltung (40) verbunden sind.

7. Pendelbeschleunigungsmesser mit einer seismischen Pendelmasse (42), die mit einem Sockel (46) verbunden ist, wobei ein Gelenk (44) ermöglicht, daß die Masse in einer Meßrichtung ausschlägt, und mit wenigstens einem Kraft-Frequenz-Meßwandler (52,54) nach einem der Ansprüche 1 bis 6, der die Masse mit dem Sockel verbindet und der mit Elektroden zum Inschwingungversetzen versehen ist, die dazu bestimmt sind, mit einem Oszillator und einer Frequenzmeßschaltung verbunden zu sein.

## Patentansprüche

1. Meßwandler mit einer langgestrecken Lamelle aus piezoelektrischem Material, die dazu bestimmt ist, an deren beiden Enden auf Elementen zum Anlegen einer Längskraft an die Lamelle befestigt zu sein, wobei die Lamelle in ihrem mittleren Abschnitt unterteilt ist, um zwei seitliche Balken (20) mit Elektroden (24-26) zum Inschwingungversetzen der Balken in der Ebene der großen Flächen der Lamelle und zum Messen der Schwingungsfrequenz zu bilden, dadurch gekennzeichnet, daß die Lamelle einen mittleren Balken (22) aufweist, der einen Widerstandstemperatursensor (36) aufweist und der von den seitlichen Balken durch Längsspalte (18) getrennt ist, die zu den großen Oberflächen der Lamelle senkrecht verlaufen.

2. Meßwandler nach Anspruch 1, dadurch gekennzeichnet, daß der mittlere Balken (22) mit den beiden Enden (10,12) der Lamelle verbunden ist.

3. Meßwandler nach Anspruch 1, dadurch gekennzeichnet, daß der mittlere Balken (22) von einem der Enden (12) der Lamelle getrennt ist.

4. Meßwandler nach einem der vorangehenden Ansprüche, dadurch gekennzeichnet, daß der mittlere Balken mit Elektroden zum Messen der Amplitude der Biegeschwingungen versehen ist.

5. Meßwandler nach einem der vorangehenden Ansprüche, dadurch gekennzeichnet, daß der Sensor durch ein dünnes Metallband (36), zum Beispiel aus Platin, auf einer Fläche des mittleren Balkens gebildet ist.

6. Meßwandler nach Anspruch 5, dadurch gekennzeichnet, daß die Enden des Bandes durch Leiterbahnen mit Anschlußflächen (38) einer Tempe-

FIG.1.

# FIG.2.

20          36    22

10                              12

# FIG.3.

34

32

30              40

38

28

# FIG.4.

56                    L              52        48

46

44        56    54    F=mg        42          50